# EUROPEAN PATENT APPLICATION

(11) **EP 1 987 968 A1**
(43) Date of publication of application: **05.11.2008**
(21) Application number: 07107231.8
(22) Date of filing: 30.04.2007
(51) Int. Cl.: B60D 1/54

(54) **Tow coupling**

(71) Applicant: Scambia Industrial Developments AG, 9494 Schaan (LI)
(72) Inventor: Legros, Olivier, 51100 Reims (FR); Devriendt, Bernard, 3000 Leuven (BE); Leerink, Onno, 4847 ED Teteringen (NL)
(74) Representative: Bohest AG

(57) **Abstract**

A tow coupling (1) comprises a housing (2) and a towball (3) and is rotatably and axially moveably arranged in the housing (2) so as to be moved between a use position and a stow position. Tow coupling (1) further comprises means for locking the towball (3) in the use and in the stow position, respectively. In addition, the tow coupling (1) comprises separate means for blocking axial movement (4, 311, 312) and rotational movement (5, 310, 316) of the towball in the use position.

## Description

The present invention relates to a tow coupling according to the preamble of the independent claim.

Tow couplings are widely used with cars in order to pull a trailer. They are typically arranged at the rear of a car and usually comprise a cross-beam fixed to the frame of the car and a towball with a towball sphere arranged behind the bumper to connect the trailer to be pulled. Also, tow couplings are known which can be moved from a use position to a stow position, and which can be locked in these positions respectively. Whenever the towball with the towball sphere is not used, it can be stored in a hidden stow position so that nothing protrudes behind the bumper of the car. Such a tow coupling is not only optically more pleasing but also has practical advantages: The tow coupling is always mounted to the car and cannot be misplaced or forgotten. From the point of view of improved safety, no object protrudes behind the car when the tow coupling is not used.

A tow coupling having a use position and a stow position is described, for example, in DE 198 26 618 A1. This system uses a guided sleeve arranged in a housing of the tow coupling. Pins are provided to lock the coupling in the stow position and in the use position and to prevent both axial movement and rotational movement of the towball. This tow coupling is comparatively complicated from a constructional point of view.

It is therefore an object of the invention to suggest a tow coupling having a use position and a stow position that allows to reliably block the towball against axial and rotational movement and which is simple and inexpensive from a constructional point of view.

This object is achieved by the tow coupling as characterised by the features of the independent claim. Advantageous embodiments become evident from the features of the dependent claims.

In particular, the tow coupling according to the invention comprises a housing and a towball being rotatably and axially moveably arranged in the housing so as to be moved between a use position and a stow position, and further comprises means for locking the towball in the use and in the stow position, respectively. In addition, the tow coupling comprises separate means for blocking axial movement and rotational movement of the towball in the use position. By using separate means for blocking axial movement and rotational movement of the towball in its use position forces acting on the towball are compensated for by separate means, whereby increased safety of the locking is achieved. At the same time, the tow coupling is simple from a constructional point of view.

In a further embodiment of the tow coupling according to the invention, the means for blocking axial movement of the towball comprise a first blocking member and a first circumferential groove in the towball for receiving the first blocking member in the use position. This embodiment is again simple from a constructional point of view.
In another further embodiment of the tow coupling according to the invention, the means for blocking rotational movement of the towball comprise at least one second blocking member and at least one first axial groove in the towball for receiving the at least one second blocking member in the use position. Once again, this embodiment is particularly simple from a constructional point of view. The at least one second blocking member may comprise an elongated clamp.

In a still further embodiment of the tow coupling according to the invention, the means for blocking rotational movement in the use position comprise two axial grooves oppositely arranged with respect to the circumferential direction and two correspondingly arranged elongated clamps. By symmetrically (i.e. oppositely) arranging the two axial grooves and the two elongated clamps for blocking rotational movement of the towball in its use position, the forces acting on the towball are compensated for symmetrically, but of course a non-symmetrical arrangement of the two axial grooves is also conceivable.

In a further embodiment of the tow coupling according to the invention, the first axial grooves are substantially longer than the length of the respective elongated clamp. The axial grooves that are substantially longer than the length of the respective clamp provide for an easy insertion of the respective clamp into the grooves. This is possible, since the axial locking and the rotational locking of the towball are decoupled. The axial locking of the towball in the use position is not achieved by the elongated clamps and, as a consequence, difficulties during entering of the elongated clamps into the first axial grooves due to production tolerances of the elongated clamps and/or the first axial grooves may not occur. Thus, there is no need to meet precise manufacturing tolerances of the first axial grooves, the elongated clamps and the housing of the tow coupling. Therefore, these components are simple and inexpensive from a manufacturing point of view.

In another further embodiment of the tow coupling according to the invention, the towball comprises at least one second axial groove for receiving the at least one second blocking member when the towball is in the stow position to lock the towball in this position with the length of the second axial groove substantially corresponding to the length of the at least one second blocking member. In the stow position no or only little loads occur, therefore both axial and rotational movements can be blocked with the aid of only one clamp and only one axial groove that has substantially the same length as the clamp.

Yet in a further embodiment of the tow coupling according to the invention, the respective elongated clamp and the respective corresponding axial groove have an at least partially tapered shape. An elongated clamp having a partially tapered shape together with a groove having a partially tapered shape does not only provide an easy way to insert the clamps into the axial grooves whenever the elongated clamps are not exactly positioned over the corresponding axial grooves, it does also provide for a tight locking of the towball in its use position without any clearance.

In a still further embodiment of the tow coupling according to the invention, means are provided to move the elongated clamp into and out of the first and second axial grooves. These means to move the elongated clamps into and out of the axial grooves are required in order to allow movement of the towball from the use position to the stow position and vice versa.

In a further embodiment of the tow coupling according to the invention, the means to move the respective elongated clamp into the first and second axial grooves comprise springs. The use of springs ensures that the clamps are tightly pressed into the axial grooves and therefore provide for a tight locking of the towball in the use position and in the stow position, respectively.

In another further embodiment of the tow coupling according to the invention, the means to move the respective elongated clamp out of the first and second axial grooves comprise a cable. The use of a cable is an easy constructive solution which allows the user to pull the elongated clamps out of the axial grooves whenever the towball has to be moved from the use to the stow position or vice versa.

Yet in a further embodiment of the tow coupling according to the invention, the towball comprises at least two flattened areas extending in axial direction so as to allow the towball to be moved in the axial direction when the first blocking member does not extend into the first circumferential groove. Whenever the first blocking member is arranged over one of the flattened areas, the towball can be moved in axial direction. The use of flattened areas allows that the first blocking member can be fixedly attached to the housing and does not have to be mechanically moved radially into and out of the first circumferential groove to allow for axial movement of the towball.

In a still further embodiment of the tow coupling according to the invention, the first blocking member is adapted to block rotational movement of the towball during axial movement from the use position to the stow position and vice versa.

In a further embodiment of the tow coupling according to the invention, the towball has a second circumferential groove, with the first circumferential groove and the second circumferential groove being connected by the at least two flattened areas. Whenever the first blocking member is arranged over one of the flattened areas - except for the regions connecting the flattened areas and the circumferential grooves - the towball can only be moved in the axial direction. This is advantageous in that the path of movement of the towball from the use position to the stow position and vice versa can be predetermined. While the first and the second circumferential grooves may extend entirely around the towball, it is possible that they extend only partially around the towball. However, the first and the second circumferential grooves have to at least connect the flattened areas to permit movement of the tow ball from the use to the stow position and vice versa.

In another further embodiment of the tow coupling according to the invention, the second circumferential groove is arranged in a manner such as to prevent the towball from being completely moved out of the housing. It is therefore impossible for the towball to fall down out of the housing, neither during running of the car nor during movement of the towball from the use to the stow position or vice versa.

Yet in a further embodiment of the tow coupling according to the invention, both the first and the second circumferential grooves as well as the first blocking member are shaped to limit rotational movement of the towball so as - together with the two flattened areas - to determine a path of movement from the use position to the stow position and vice versa. This allows for a well-defined path of movement of the towball from the use position to the stow position or vice versa, and thus simplifies handling of the tow coupling through the user.

According to a further aspect of the invention, the above-described tow coupling can be part of a tow bar that comprises the tow coupling, a cross-beam to which the tow coupling is mounted, and means for mounting the tow bar to a carrying vehicle. The tow bar may be mounted to the carrying vehicle with the aid of flanges, which may be an integral part of the tow bar and which can be fixed in any suitable manner to the carrying vehicle. The tow bar can be mounted to and sold together with a new car or can be sold separately.

The tow coupling according to the invention can be manually moved from the use position to the stow position and vice versa. However, it is also conceivable to provide a tow coupling where these movements can be performed automatically with the aid of a suitable motor and control system.

Further advantageous aspects of the tow coupling become evident by the following detailed description of the specific embodiments with the aid of the drawings, in which:
- Fig. 1: shows an exploded view of one embodiment of the tow coupling according to the invention,
- Fig. 2: shows a perspective view of the towball axle of the towball of the tow coupling according to the invention,
- Fig. 3: shows a detail of a cross-section through the towball axle along line III-III of Fig. 2,
- Fig. 4: shows a side view of an elongated clamp of the tow coupling of Fig. 1,
- Fig. 5: shows a front view of the elongated clamp of Fig. 4,
- Fig. 6: shows a perspective view of the first blocking member of the tow coupling of Fig. 1,
- Fig. 7: shows a side view of the first blocking member of Fig. 6,
- Fig. 8: shows a perspective view of the housing of the tow coupling of Fig. 1,
- Fig. 9: shows a top view of an embodiment of the towball arm and towball sphere of the tow coupling according to the invention,
- Fig. 10: shows schematically the rotational locking principle of the towball in the use position, and
- Fig. 11: shows schematically the locking principle of the towball in the stow position.

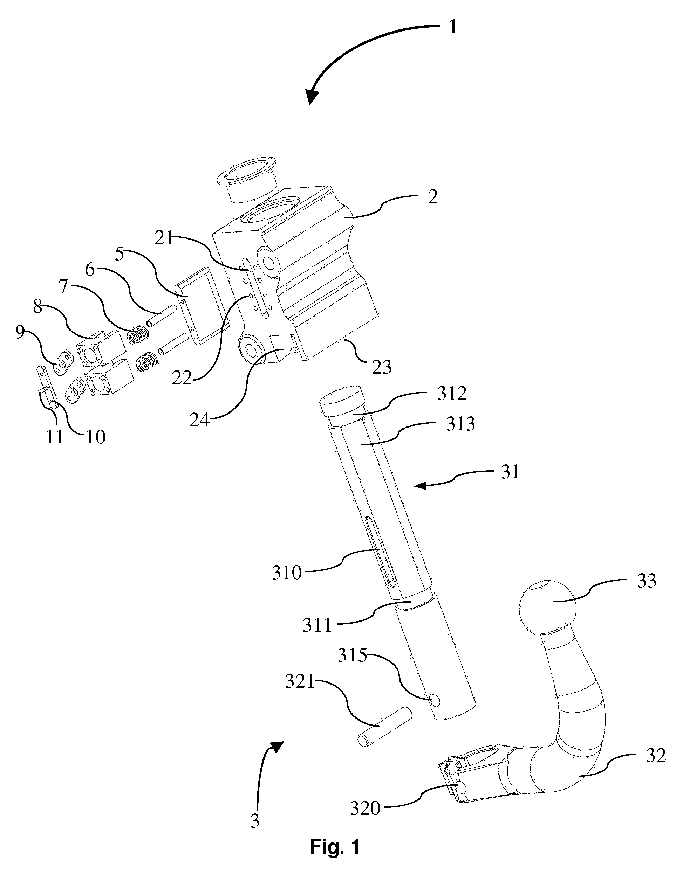

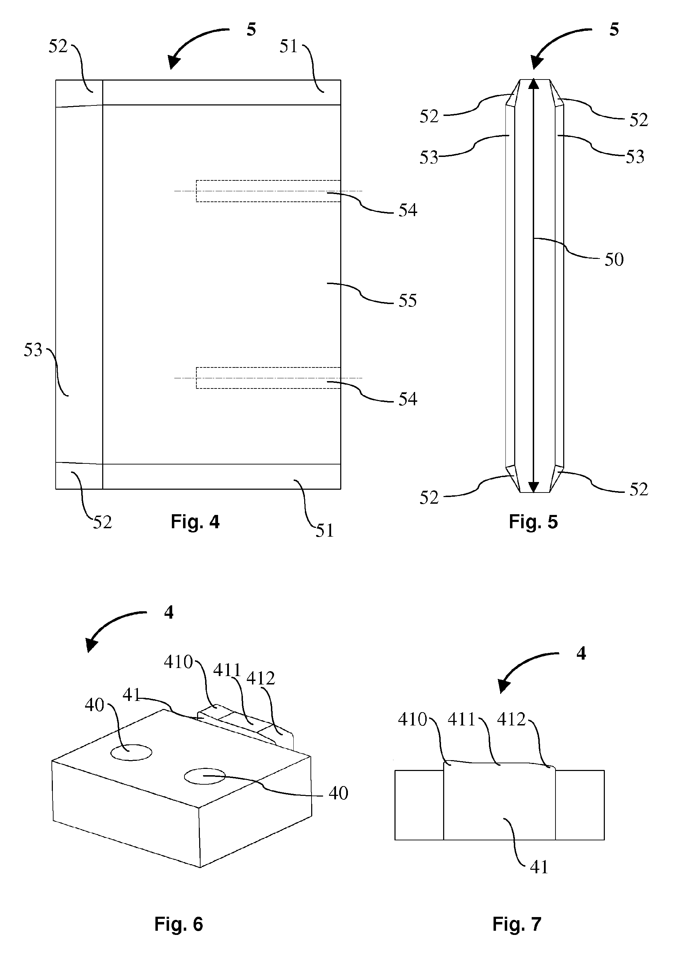

In Fig. 1 there is shown an embodiment of a tow coupling 1 according to the invention. Tow coupling 1 comprises a housing 2, and a towball 3 having a towball axle 31, a towball arm 32 and a towball sphere 33. The towball arm 32 is connected to the towball axle 31 and secured by means of a bolt 321 that is inserted into hole 320 of towball arm 32 and into hole 315 of towball axle 31. Tow coupling 1 further comprises a pair of elongated clamps 5, only one of them being shown in Fig. 1, and a first blocking member 4 (see Fig. 6). The second elongated clamp of the pair of elongated clamps is arranged opposite to the first elongated clamp 5 (i.e. on the other side of housing 2). The first blocking member is attached to the housing 2 in a lateral recess 24. During assembly of the tow coupling 1, towball axle 31 of the towball 3 is inserted in the housing 2 through a hole 23 in the bottom of housing 2. Guiding pins 6 are mounted at their one ends to the elongated clamps 5 and extend through mounting sleeves 8 and bars 9. At their other ends, guiding pins 6 are connected to a further bar 10. A cable 11 is also attached to bar 10. Mounting sleeves 8 are connected to housing 2 at mounting holes 22, and springs 7 are arranged between mounting sleeves 8 and elongated clamps 5. Several parts shown in Fig. 1 can be combined in order to simplify manufacturing of these parts, for example the guiding pins 6 can form an integral part with the elongated clamps 5.

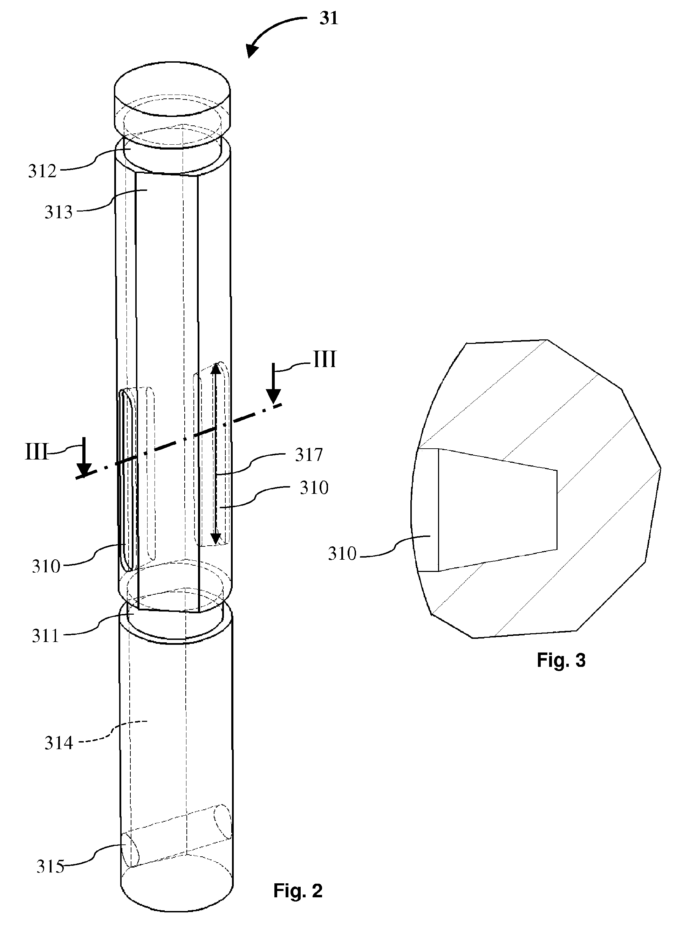

Fig. 2 shows the towball axle 31 of the towball 3 of an embodiment of the tow coupling according to the invention in more detail. Towball axle 31 comprises oppositely arranged first axial grooves 310 intended to receive the elongated clamps 5 of Fig. 1 in the use position, a first circumferential groove 311, a second circumferential groove 312, two flattened areas 313 and 314, and a hole 315 to connect the towball axle 31 to the towball arm 32 by means of a bolt 321 (Fig. 1). The first flattened area 313 extends from the first circumferential groove 311 up to the second circumferential groove 312, whereas the second flattened area 314 extends all the way from the second circumferential groove 312 over the first circumferential groove 311 down to the bottom of the towball axle 31. While the first 311 and the second 312 circumferential grooves may extend entirely around the towball axle 31, it is possible that they extend only partially around the towball axle 31. However, the first 311 and the second 312 circumferential grooves have to connect at least the flattened areas 313 and 314 to permit movement of the towball 3 from the use to the stow position and vice versa.

Fig. 3 shows a detail of a cross-section along line III-III of Fig. 2, showing the partially tapered shape of one of the first axial grooves 310.

Fig. 4 shows a side view of an elongated clamp 5 of the tow coupling 1. Elongated clamp 5 comprises holes 54 which allow mounting of the guiding pins 6 at the rear side of clamp 5. Clamp 5 has a partially tapered shape with angled surfaces 51, 52 and 53. Several parts shown in Fig. 4 can be combined in order to simplify manufacturing of these parts, for example the guiding pins 6 can form an integral part with the elongated clamps 5.

Fig. 5 shows a front view of the elongated clamp 5 of Fig. 4 with the angled surfaces 52 and 53 being clearly visible. The length 317 of the first axial groove 310 shown in Fig. 2 is substantially longer than the length 50 of the elongated clamp 5. This is due to the fact, that the axial locking and the rotational locking are decoupled. The axial locking of the towball in the use position is not achieved by the elongated clamps 5 due to the greater length 317 of first axial grooves 310 when compared to the length 50 of elongated clamp 5, difficulties during entering of elongated clamps 5 into first axial grooves 310 due to production tolerances of the elongated clamps 5 and/or the first axial grooves 310 may not occur. Thus, there is no need to meet precise manufacturing tolerances of the first axial grooves 310, the elongated clamps 5 and the housing 2 of the tow coupling 1. Therefore, these components are simple and inexpensive from a manufacturing point of view.

Fig. 6 shows a perspective view of the first blocking member 4 of the tow coupling 1. First blocking member 4 comprises holes 40 through which screws may extend for mounting first blocking member 4 at recess 24 (Fig. 1) to housing 2. First blocking member 4 further comprises a protrusion 41 for extending either into one of the first or second circumferential grooves 311 or 312 or for gliding over one of the flattened areas 313 or 314 of towball axle 31.

Fig. 7 shows a side view of the first blocking member 4 with protrusion 41. Protrusion 41 has one plane surface 411 and two inclined surfaces 410 and 412. When the surfaces enter the first circumferential groove 311 of the towball axle 31, they gradually tighten the engagement between first blocking member 4 and towball axle 31 in the circumferential groove 311 when approaching the use position. Whenever protrusion 41 of the first blocking member 4 extends into the second circumferential groove 312 and upon rotation of towball axle 31 comes to be arranged over one of the flattened areas 313 or 314 of the towball axle 31, it allows for axial movement of the towball axle 31 and thus determines the unique path of movement of the towball axle 31 from the use position to the stow position or vice versa.

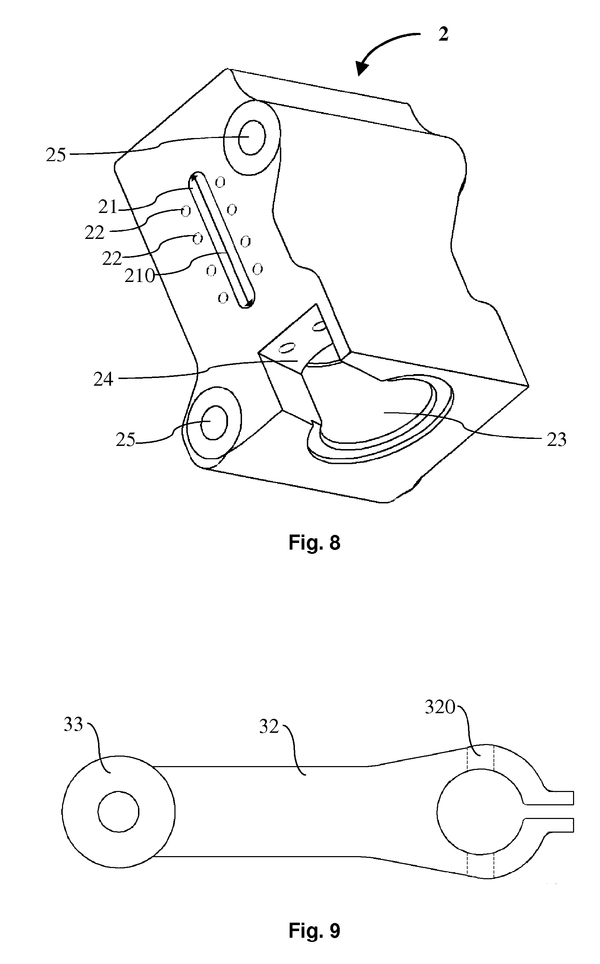

Fig. 8 shows a perspective view of the housing 2 of the tow coupling 1. Housing 2 comprises elongated holes 21 to receive the respective elongated clamps 5, a hole 23 to receive towball axle 31 of the towball 3, a lateral recess 24 to accommodate first blocking member 4, and holes 25 which enable the housing 2 to be mounted to a cross-beam (not visible). The length 210 of the elongated holes 21 is substantially the same as the length 50 of elongated clamps 5.

Fig. 9 shows a top view of an embodiment of the towball arm 32 and towball sphere 33 of the towball 3 of the tow coupling according to the invention. The towball arm 32 comprises a hole 320 for connection of the towball arm 32 to the towball axle 31 of towball 3 as shown in Fig. 1. A two-part towball 3 comprising a towball axle 31 on one hand and a towball arm 32 with a towball sphere 33 on the other hand is advantageous with respect to mass production of tow couplings. It allows to produce a more or less standardised towball arm 32 with a towball sphere 33 for a plurality of tow couplings, whereas the towball axle 31 can be produced specifically adapted to the respective car model.

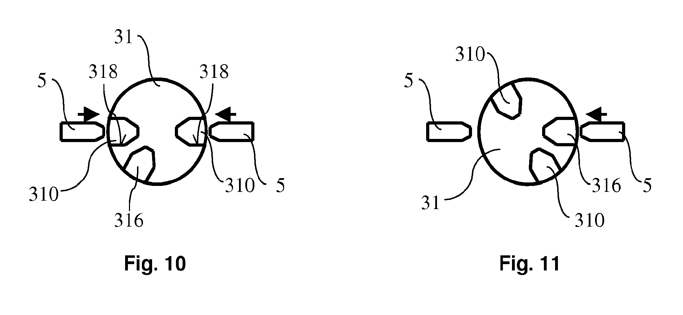

Fig. 10 shows schematically the rotational locking principle of the towball 3 in the use position. The elongated clamps 5 are moved into the first axial grooves 310 of the towball axle 31 (see arrows in Fig. 10) by means of springs 7 (see Fig. 1) to achieve rotational locking of the towball axle 31, whereas second axial groove 316 is not used.

Fig. 11 shows schematically the locking principle of the towball 3 in the stow position. One of the elongated clamps 5 is moved into the second axial groove 316 of the towball axle 31 (see arrows in Fig. 11), whereas the first axial grooves 310 are not used. The second elongated clamp is not used either. The length of the second axial groove 316 is substantially the same as the length 50 of the elongated clamp 5, so that one and the same elongated clamp 5 is blocking both axial and rotational movement of towball axle 31 in the stow position, where no or only little loads occur.

In the use position the towball is locked against rotational movement by the elongated clamps 5 that extend through elongated holes 21 of housing 2 and into the first axial grooves 310 of the towball axle 31. The springs 7 ensure that the elongated clamps 5 are securely pressed into the first axial grooves 310. Due to the partially tapered shape of the elongated clamps 5 and to the partially tapered shape of the first axial grooves 310, the elongated clamps can easily enter into the first axial grooves 310 and compensate for or correct a possible small rotational misalignment between clamps 5 and first axial grooves 310. The partially tapered shape also provides for a tight locking without any clearance. The partially tapered shape of the elongated clamps 5 and the partially tapered shape of the first axial grooves 310 also provide for an efficient compensation of rotational loads that may occur during use of the tow coupling in the use position. However, if due to a heavy rotational load on the towball axle 31 the first elongated clamps 5 may be pushed slightly out of the first axial grooves 310, then the main side face 55 of the elongated clamp 5 gets into contact with the non-tapered side face 318 of the first axial groove 310 and a tight lock is again ensured. In addition, in the use position the towball axle 31 is locked against axial movement by first blocking member 4 with its protrusion 41 extending into first circumferential groove 311 of towball axle 31.

For moving towball 3 from the use position to the stow position, the user has to first move elongated clamps 5 out of the axial grooves 310 by pulling cable 11. Then the user has to turn the towball 3 to the left until protrusion 41 of the first blocking member 4 is arranged over the first flattened area 313 of the towball axle 31. Once protrusion 41 is arranged over the first flattened area 313, there is no more locking of towball axle 31 in axial direction and towball 3 can be moved axially out of the housing 2 (downwards). However, towball 3 cannot be moved completely out of the housing 2, as the non-flattened cylindrical portion above second circumferential groove 312 prevents this. Whenever protrusion 41 arrives at second circumferential groove 312, towball 3 has to be turned again in rotational direction, this time to the right, until protrusion 41 is arranged over second flattened area 314. Towball 3 then has to be pushed all the way up into the housing 2. Protrusion 41 glides over the second flattened area 314 and since second flattened area 314 extends all the way from second circumferential groove 312 down to the bottom of the towball axle 31, towball 3 can be moved all the way into the housing 2. Compared to the use position, where the axial movement is prevented by protrusion 41 of the first blocking member 4 extending into first circumferential groove 311, towball 3 can now be moved all the way into the housing 2, so as to allow hiding towball arm 32 with towball sphere 33 under or behind the bumper of a car. Once towball 3 is in the stow position, it has to be locked in this position by releasing cable 11. This causes one of the elongated clamps 5 to be inserted into one of the second axial grooves 316 due to resilient force of springs 7. The other elongated clamp is not used, as in the stow position no or only little loads occur. Therefore, axial and rotational movement can be blocked by the engagement of only one of the elongated clamps 5 and second axial groove 316. In addition, the first blocking member 4 is also blocking rotational movement of the towball axle 31 in the stow position, as protrusion 41 is arranged over second flattened area 314 of the towball axle 31 so that towball axle 31 cannot be rotated. In addition, axial movement in the stow position can also be blocked by an external device, e.g. by a clip fixed to the cross-beam, and by clipping-in the towball sphere 33 in the clip in the stow position.

For movement of towball 3 from the stow position to the use position cable 11 has to be pulled in order to move that one of the elongated clamps 5, which extends into the second axial groove 316, out of the said groove 316. Towball 3 can now be moved axially out of housing 2. A rotational movement is not possible, as protrusion 41 is arranged over second flattened area 314 and therefore only axial movement of the towball 3 is possible. Once protrusion 41 arrives at second circumferential groove 312, towball 3 can no longer be moved in axial direction out of housing 2, as protrusion 41 is prevented from further axial movement by the non-flattened cylindrical portion above second circumferential groove 312. Towball 3 has now to be turned to the left until protrusion 41 of the first blocking member 4 is arranged over first flattened area 313. Now towball 3 has to be axially moved back into the housing again, but only to a position where protrusion 41 arrives at first circumferential groove 311. Further axial movement into the housing 2 is not possible in this position due to the non-flattened cylindrical portion below first circumferential groove 311. Only rotational movement, guided by the protrusion 41 and the first circumferential groove 311, is now possible. In order to reach the use position, towball 3 has to be turned to the right. The shape of first circumferential groove 311 together with the shape of the surfaces 410, 411 and 412 of protrusion 41 provide for a gradual tightening once towball 3 approaches the use position. In the use position, the user only has to release cable 11 in order to insert the elongated clamps 5 into the first axial grooves 310 so as to block rotational movement of the towball 3 in the use position.

## Claims

1. Tow coupling (1) comprising a housing (2) and a towball (3) being rotatably and axially moveably arranged in the housing (2) so as to be moved between a use position and a stow position, and further comprising means for locking the towball (3) in the use and in the stow position, respectively, **characterised in that** the tow coupling comprises separate means for blocking axial movement (4, 311, 312) and rotational movement (5, 310, 316) of the towball (3) in the use position.

2. Tow coupling (1) according to claim 1, wherein the means for blocking axial movement of the towball (3) comprise a first blocking member (4) and a first circumferential groove (311) in the towball (3) for receiving the first blocking member (4) in the use position.

3. Tow coupling (1) according to any one of claims 1 or 2, wherein the means for blocking rotational movement of the towball (3) comprise at least one second blocking member and at least one first axial groove (310) in the towball (3) for receiving the at least one second blocking member in the use position.

4. Tow coupling (1) according to claim 3, wherein the at least one second blocking member comprises an elongated clamp (5).

5. Tow coupling (1) according to claim 4, wherein the means for blocking rotational movement in the use position comprise two axial grooves (310) oppositely arranged with respect to the circumferential direction and two correspondingly arranged elongated clamps (5).

6. Tow coupling (1) according to claim 4 or 5, wherein the first axial grooves (310) are substantially longer than the length of the respective elongated clamp (5).

7. Tow coupling (1) according to any one of claims 3 to 7, wherein the towball (3) comprises at least one second axial groove (316) for receiving the at least one second blocking member (5) when the towball is in the stow position to lock the towball (3) in this position, with the length of the second axial groove (316) substantially corresponding to the length of the at least one second blocking member (5).

8. Tow coupling (1) according to any one of claims 4 to 7, wherein the respective elongated clamp (5) and the respective corresponding axial groove (310, 316) have an at least partially tapered shape.

9. Tow coupling (1) according to any one of claims 4 to 8, wherein means are provided to move the elongated clamp (5) into and out of the first (310) and second (316) axial grooves.

10. Tow coupling (1) according to claim 9, wherein the means to move the respective elongated clamp (5) into the first (310) and second (316) axial grooves comprise springs (7).

11. Tow coupling (1) according to any one of claims 9 or 10, wherein the means to move the respective elongated clamp (5) out of the first (310) and second (316) axial grooves comprise a cable (11).

12. Tow coupling (1) according to any one of claims 2 to 11, wherein the towball (3) comprises at least two flattened areas (313, 314) extending in axial direction so as to allow the towball (3) to be moved in the axial direction when the first blocking member (4) does not extend into the first circumferential groove (311).

13. Tow coupling (1) according to claim 12, wherein the first blocking member (4) is adapted to block rotational movement of the towball (3) during axial movement from the use position to the stow position and vice versa.

14. Tow coupling (1) according to any one of claims 12 or 13, wherein the towball (3) has a second circumferential groove (312), with the first circumferential groove (311) and the second circumferential groove (312) being connected by the at least two flattened areas (313, 314).

15. Tow coupling (1) according to claim 14, wherein the second circumferential groove (312) is arranged in a manner such as to prevent the towball (3) from being completely moved out of the housing (2).

16. Tow coupling (1) according to any one of claims 14 or 15, wherein both the first (311) and the second (312) circumferential grooves as well as the first blocking member (4) are shaped to limit rotational movement of the towball (3) so as - together with the two flattened areas (313, 314) - to determine a path of movement from the use position to the stow position and vice versa.

17. Tow bar comprising a tow coupling, a cross-beam to which the tow coupling is mounted, and means for mounting the tow bar to a carrying vehicle, **characterized in that** the tow coupling is a tow coupling (1) according to anyone of the preceding claims.
